# EUROPEAN PATENT APPLICATION

(11) **EP 1 852 834 A2**
(43) Date of publication of application: **07.11.2007**
(21) Application number: 07010032.6
(22) Date of filing: 26.01.1996
(51) Int. Cl.: G07B 17/00, G01G 19/42

(54) **Method of using a weighscale in combination with a franking machine to determine the number of mail items in a batch**

(30) Priority: 31.01.1995 GB 9501850
(62) Divisional of application: 96300581.4
(71) Applicant: NEOPOST LIMITED, Romford, Essex RM1 2AR (GB)
(72) Inventor: Herbert, Raymond John, Leigh-on-Sea Essex, SS9 3PP (GB)
(74) Representative: Boden, Keith McMurray

(57) **Abstract**

A method of using a weighscale in combination with a franking machine to determine the number of mail items in a batch of identical weight characterised by the steps of weighing (35) a single item from said batch and weighing (38) the total batch and utilising electronic accounting means (11) of the franking machine to determine (39) from the item weight and the batch weight the number of items in the batch.

## Description

This invention relates to franking machines and in particular to the use of weighscales in combination with franking machines.

Known electronic franking machines include electronic circuits for carrying out accounting functions in relation to values of postage charges in respect of mail items and for maintaining accounting records relating to an amount of credit available for use in franking mail items and to other accounting items relating to use of the franking machine in franking mail items. The electronic circuits also carry out control functions in respect of operation of the franking machine to feed mail items through the machine past a print head of the franking machine and in respect of setting and operating the print head to print a required value of postage charge for which accounting functions have been carried out.

The value of postage charge relating to a mail item usually is dependent inter alia upon the weight of the item and hence it is common to provide a weighscale alongside the franking machine to enable a user to determine an appropriate value of postage charge in respect of each item to be franked. While the weighscale may operate independently of the franking machine, it is often preferred that the weighscale be operated in conjunction with the franking machine. The weighscale is constructed and operable to output to, the franking machine, a weight signal representing the weight of a mail item supported on a scale pan of the weighscale. The franking machine accepts the weight signal from the weighscale and utilises the weight signal to determine the value of postage charge applicable to the item on the scale pan.

The present invention is concerned with utilising the weighscale and franking machine to perform additional functions.

EP-A-0336589 discloses a franking machine which includes printing means for printing franking impressions on articles, such as letters, and a weighing pan for weighing the articles such as to allow the appropriate postage charges to be determined.

JP-A-62-025216 discloses a recording pen mechanism which determines when the ink supply of the pen is running short of ink. The determination of the residual quantity of ink in the ink supply is performed using a pressure sensor, where the pressure as applied to this sensor is related to the weight of the ink available to the recording pen.

In one aspect the present invention provides a method of using a weighscale in combination with a franking machine to determine the number of mail items in a batch of identical weight characterised by the steps of weighing a single item from said batch and weighing the total batch and utilising electronic accounting means of the franking machine to determine from the item weight and the batch weight the number of items in the batch.

In another aspect the present invention provides a franking machine in combination with weighscale means, said franking machine including electronic circuit means for carrying out accounting and control functions in relation to franking of mail items; printing means for printing franking impressions on said mail items and a replaceable ink supply containing ink for supply of ink to said printing means; said ink in said ink supply being gradually depleted as franking impressions are printed by said printing means; characterised in that said weighscale is operable to output a weight signal representing a weight of said ink supply, in that said electronic circuit means includes memory means storing data relating to weight of said ink supply; and in that said electronic circuit means is operative in response to said weight signal to determine a quantity of ink remaining in the ink supply.

In a further aspect the present invention provides a method of determining a level of ink remaining in an ink supply for printing means of a franking machine in which the quantity of ink in the ink supply is gradually depleted as franking operations are carried out characterised by the steps of storing data relating to weight of an ink supply containing at least one known quantity of ink therein; weighing said ink supply and inputting a signal to the franking machine representing weight of the ink supply containing an unknown quantity of ink; and comparing said signal with said stored data to determine the quantity of ink remaining in the ink supply.

An embodiment of the invention will be described hereinafter with reference to the drawings, in which:

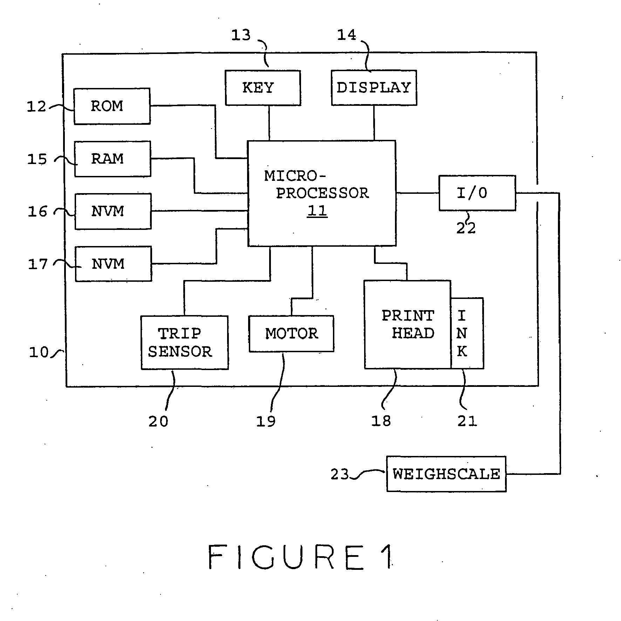

Figure 1 is a block diagram of a franking machine and weighscale,
Figure 2 is a flow chart illustrating the checking of ink remaining in an ink supply, and
Figure 3 is a flow chart illustrating checking the number of items in a batch of mail items.

Referring now to the drawing, the franking machine 10 includes a micro-processor 11 operating under program routines stored in a read only memory (ROM) 12. As is well known electronic franking machines, a keyboard 13 is provided for input of data by a user and a display 14 is provided to enable display of information to the user. A random access memory (RAM) 15 is provided for use as a working store for storage of temporary data during operation of the franking machine. Non-volatile duplicated memories 16, 17 are provided for the storage of data which is required to be retained even when the franking machine is not powered, Accounting data relating to use of the franking machine for printing franking impressions representing postage charges for mail items and any other critical data to be retained is stored in the non-volatile memories 16, 17. A print head 18 having a print drum selectively rotatable by a motor 19 is provided for printing franking impressions on mail items. The print drum carries a print die for printing an invariable pattern forming a part of the franking impression and, if desired, a further print die for printing slogan or other information alongside the franking impression. The print drum also carries two sets of print wheels for printing variable data in the franking impression. The print wheels have type characters located on the peripheries of the wheels and are disposed on the drum such that a required type character of each wheel may be brought into an exposed position so that the required character is printed in a printing operation. A first set of print wheels prints a required postage charge in respect of a mail item being franked and a second set of print wheels prints the date on which the franking impression is printed. Generally the second set of print wheels are set manually to print the required date. However the first set of print wheels which print a postage charge are set by means controlled by the microprocessor 11.

When it is desired to frank a mail item, a required postage charge for the mail item is input on the keyboard 13 and the microprocessor carries out accounting functions, including checking that sufficient credit is available for the required postage charge, and sets the first set of print wheels of the print head for printing a franking impression including the required postage charge. The mail item is fed into the franking machine and the leading edge of the mail item is sensed by a trip sensor 20. The trip sensor 20 provides a signal to the microprocessor 11 to initiate printing of the franking impression and to update the accounting records to take account of the value of the postage charge to be printed. Feeding means of the franking machine feed the mail item to the print head and the microprocessor initiates rotation of the print drum by the motor 19. Upon rotation of the print drum, the print dies and the exposed type characters of the print wheels are inked by an ink supply 21 so as to coat the dies and type characters with ink. Continued rotation of the print drum by the motor 19 causes the inked dies and type characters to be brought into printing engagement with a surface of the mail item whereby printing of the franking impression and the slogan is effected. Generally the ink supply comprises a replaceable inking roller of porous material the pores of which contain ink. The print dies and type characters make rolling engagement with the inking roller and during this engagement ink is transferred from the pores of the inking roller to the print dies and type characters. It will be appreciated that ink contained in the pores of the inking roller is depleted by each printing operation. Eventually the amount of ink contained in the inking roller is insufficient to properly ink the print dies and type characters and consequently if printing of a franking impression is attempted only an imperfect impression is obtained. Accordingly it is necessary for a user of the franking machine to check the quality of the printed impression and to replace the depleted inking roller with a new inked roller prior to the visible quality of the printed impression decreasing to an unacceptable quality.

The franking machine is provided with a communication port 22 to enable communication between the microprocessor 11 of the franking machine and other devices. The postage charge in respect of a mail item is usually dependent upon the weight of the mail item and hence it is common to provide a weighscale 23 adjacent to the franking machine to enable mail items to be weighed so as to determine the appropriate postage charge prior to inputting the postage charge to the franking machine. The weighscale may be constructed to output a signal representing the weight of an item on the weighscale and this signal may be input directly to the franking machine by connecting the output of the weighscale to the communication port 22. The microprocessor 11 is programmed to calculate the postage charge required for the item being weighed in dependence upon the weight signal from the weighscale and to utilise the calculated postage charge as the postage charge to be accounted for and printed in a franking operation. Accordingly the user of the franking machine is saved from entering the required postage charge on the keyboard 13.

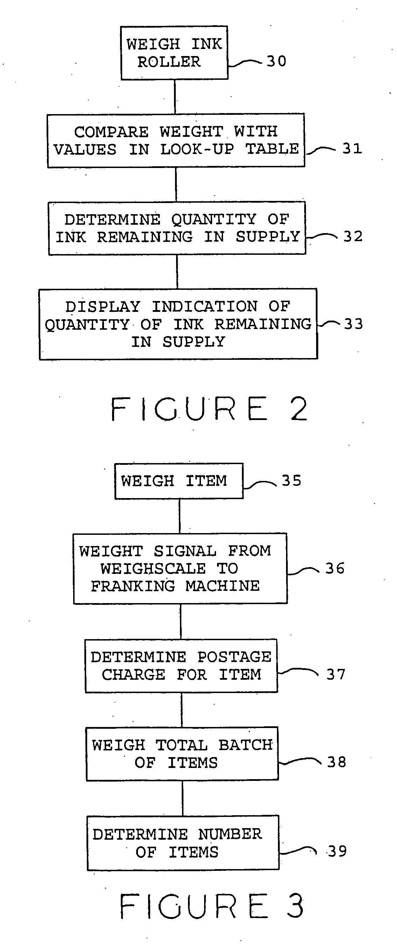

It is now proposed to utilise the weighscale and franking machine to determine the quantity of ink remaining in the inking roller of the franking machine and to provide an indication to the user of the franking machine when the quantity of ink remaining in the inking roller has been depleted to such an extent that replacement of the inking roller is necessary. The franking machine stores in a look-up table in non-volatile memory values of the weight of a new inking roller fully loaded with ink and the weight of an inking roller when depleted of ink to such an extent that the printed impression is still of acceptable quality but that if further impressions are printed, such further impressions are likely to be of unacceptable quality. In an inking roller check operation, illustrated by the flow chart of Figure 2, the inking roller is removed from the print head of the franking machine and is placed on the scale pan of the weighscale to weigh (box 30) the inking roller together with ink contained in the inking roller. The microprocessor 11 is operable under a program routine stored in ROM 12 to accept an output signal from the weighscale and to compare (box 31) the weight signal with the values stored in the look-up table and determines (box 32) the quantity of ink remaining in the inking roller. From this determination, the microprocessor displays (box 33) on display 14 an indication relating to the quantity of ink remaining in the inking roller. This indication may comprise a percentage rating or may comprise a number of franking printing operations which can still be performed before replacement of the inking roller becomes necessary. The look-up table may contain values relating to fully loaded and depleted inking rollers as described hereinbefore or may contain in addition a plurality of values of weights of the inking roller for ink quantities intermediate fully loaded and depleted.

If desired, the print head of the franking machine may be provided with means whereby the microprocessor is enabled to detect when a new unused inking roller is mounted on the print head. The microprocessor may then be programmed to inhibit further operation of the franking machine, after determination that the ink in the inking roller has been depleted to an extent that further printing impressions cannot reliably be produced, until a new unused inking roller is mounted on the print head.

The print head and ink supply have been described hereinbefore as a rotatable print drum and an inking roller respectively. However determination of an ink supply of other types of print head with other forms of ink supply may be carried out in a similar manner. For example ink jet print heads are known which contain an integral liquid ink supply and the entire print head and ink supply is replaced when the ink has been depleted. Accordingly the look-up table contains data relating to the values of weight of the print head when fully loaded with ink and when depleted of ink. Determination of the ink supply remaining in the print head is effected by removing the print head from the franking machine and placing on the scalepan of the weighscale. The output signal from the weighscale is then utilised as described hereinbefore to determine the quantity of ink remaining in the print head.

The weighscale may also be used in relation to handling batches of mail items of identical weight to be franked by the franking machine as illustrated by the flow chart of Figure 3. A single sample item from the batch is placed on the weighscale and weighed (box 35). The output signal from the weighscale is input to the microprocessor 11 for temporary storage, for example in RAM 15, and the postage charge applicable for each of the items of the batch is determined (box 37). The total batch of items is placed on the weighscale and weighed (box 38) and the weighscale output signal corresponding to the batch of items is input to the microprocessor. The microprocessor then uses the single item signal and the batch signal to determine (box 39) the number of mail items in the batch.

## Claims

1. A method of using a weighscale in combination with a franking machine to determine the number of mail items in a batch of identical weight **characterised by** the steps of weighing (35) a single item from said batch and weighing (38) the total batch and utilising electronic accounting means (11) of the franking machine to determine (39) from the item weight and the batch weight the number of items in the batch.

2. A franking machine in combination with weighscale means, said franking machine including electronic circuit means (11) for carrying out accounting and control functions in relation to franking of mail items; printing means (18) for printing franking impressions on said mail items and a replaceable ink supply (21) containing ink for supply of ink to said printing means (18); said ink in said ink supply (21) being gradually depleted as franking impressions are printed by said printing means; **characterised in that** said weighscale (23) is operable to output a weight signal representing a weight of said ink supply (21), **in that** said electronic circuit means (11) includes memory means (16, 17) storing data relating to weight of said ink supply (21); and **in that** said electronic circuit means (11) is operative in response to said weight signal to determine a quantity of ink remaining in the ink supply (21).

3. A franking machine in combination with a weighscale as claimed in claim 2 including display means (14) and wherein the electronic circuit means (11) is operative to display an indication of the quantity of ink remaining in the ink supply (21).

4. A franking machine in combination with a weighscale as claimed in claim 3 wherein the indication is displayed as a percentage of an ink supply fully loaded with ink.

5. A franking machine in combination with a weighscale as claimed in claim 3 or 4 wherein the electronic circuit means (11) is operative in response to a determination that the ink is depleted to a predetermined level to display an indication that the ink supply (21) requires replacement.

6. A franking machine in combination with a weighscale as claimed in claim 5 wherein the electronic circuit means (11) is responsive to mounting on the printing means (18) of an ink supply (21) fully loaded with ink fully and is operative in response to a determination that the ink is depleted to a predetermined quantity to inhibit further operation of the franking machine until the ink supply (21) is replaced with a fully loaded ink supply (21).

7. A method of determining a level of ink remaining in an ink supply (21) for printing means (18) of a franking machine in which the quantity of ink in the ink supply (21) is gradually depleted as franking operations are carried out **characterised by** the steps of storing data relating to weight of an ink supply (21) containing at least one known quantity of ink therein; weighing (30) said ink supply (21) and inputting a signal to the franking machine representing weight of the ink supply (21) containing an unknown quantity of ink; and comparing (31) said signal with said stored data to determine (32) the quantity of ink remaining in the ink supply (21).
